# EUROPEAN PATENT APPLICATION

(11) **EP 4 485 311 A1**
(43) Date of publication of application: **01.01.2025**
(21) Application number: 24182565.2
(22) Date of filing: 17.06.2024
(51) Int. Cl.: G06Q 10/10, G06Q 50/20, G09B 5/02, G09B 7/10

(54) **INFORMATION PROCESSING APPARATUS, INFORMATION PROCESSING SYSTEM, INFORMATION PROCESSING METHOD, AND PROGRAM**

(30) Priority: 28.06.2023 JP 2023105880
(71) Applicant: Casio Computer Co., Ltd., Tokyo 151-8543 (JP)
(72) Inventor: Hasunuma, Takuya, Hamura-shi, Tokyo, 205-8555 (JP)
(74) Representative: Grünecker Patent- und Rechtsanwälte PartG mbB

(57) **Abstract**

Provided is an information processing apparatus including a hardware processor that: generates, in accordance with a command by a specific user, a storage region that is for storing information used by a plurality of users who belong to a specific group and that is set with an expiration date; and displays an icon that corresponds to the storage region on screens of terminals that are respectively operated by the plurality of users until the expiration date arrives.

## Description

### REFERENCE TO RELATED APPLICATIONS

This application is based upon and claims the benefit of priority from the prior Japanese Patent Application No. 2023-105880, filed on June 28, 2023, the entire contents of which are incorporated herein by reference.

### TECHNICAL FIELD

The present invention pertains to an information processing apparatus, an information processing system, an information processing method, and a program.

### BACKGROUND OF THE INVENTION

Japanese Patent Application No. 2002-244542 discloses an education system that is provided with a teacher terminal apparatus, a participant terminal apparatus, and a database server. In a case where the participant terminal apparatus has first accessed content that is for a specific course and is stored in the database server, the database server provides all content for the specific course to the participant terminal apparatus. In a case where the participant terminal apparatus has again accessed content that is for a specific course and is stored in the database server, the database server provides the participant terminal apparatus with all updated content and additional content, from among content for the specific course.

Incidentally, in a case of enabling sharing, viewing, or editing of content among teachers or students included in a specific class in alignment with the time period in which a course is taught, it is necessary for the user (teacher or student) who created the content to operate a terminal apparatus that they have logged into, and set the content as shared data that has an expiration date for each of the remaining plurality of users in the specific class.

### SUMMARY OF THE INVENTION

The present invention is made in light of such a problem. An objective of the present invention is to enable data, to which an expiration date has been set, to be easily shared as information among a plurality of users who belong to a specific group.

To achieve at least one of the abovementioned objects, according to an aspect of the present disclosure, there is provided an information processing apparatus including a hardware processor that:
generates, in accordance with a command by a specific user, a storage region that is for storing information used by a plurality of users who belong to a specific group and that is set with an expiration date; and
displays an icon that corresponds to the storage region on screens of terminals that are respectively operated by the plurality of users until the expiration date arrives.

According to another aspect of the present disclosure, there is provided an information processing system, including: an information processing apparatus; and a terminal that is operated by a user who belongs to a specific group,
wherein the information processing apparatus:
generates, in response to operation of the terminal by a specific user who belongs to the specific group, a storage region in a storage that is managed by the information processing apparatus,
   wherein the storage region is for storing information used by a plurality of users who belong to the specific group, and is set with an expiration date; and
displays an icon that corresponds to the storage region on display screens of the terminals that are respectively operated by the plurality of users until the expiration date arrives.

According to another aspect of the present disclosure, there is provided an information processing method that is executed by an information processing apparatus, the information processing method including:
generating, in accordance with a command by a specific user, a storage region that is for storing information used by a plurality of users who belong to a specific group and that is set with an expiration date; and
displaying an icon that corresponds to the storage region on each of the screens of terminals that are respectively operated by the plurality of users until the expiration date arrives.

According to another aspect of the present disclosure, there is provided a program causes a computer to:
generate, in accordance with a command by a specific user, a storage region that is for storing information used by a plurality of users who belong to a specific group and that is set with an expiration date; and
display an icon that corresponds to the storage region on screens of terminals that are respectively operated by the plurality of users until the expiration date arrives.

By virtue of each aspect of the present invention, data to which an expiration date has been set to can be easily shared as information among a plurality of users who belong to a specific group.

### BRIEF DESCRIPTION OF DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG. 1 is a view that illustrates an overall configuration of an information processing system;
FIG. 2 is a view that exemplifies an account database in a data table format;
FIG. 3 is a view that exemplifies a course database in a data table format;
FIG. 4 is a view that exemplifies a hierarchical structure for a data storage region;
FIG. 5 is a view that exemplifies a registration screen;
FIG. 6A is a flow chart that illustrates a flow of processing executed by a controller in an information processing apparatus;
FIG. 6B is a flow chart that illustrates a flow of processing executed by a controller in an information processing apparatus;
FIG. 7 is a view that exemplifies a course screen;
FIG. 8 is a view that exemplifies a notebook screen; and
FIG. 9 is a view that exemplifies a sticky note storage screen.

### DETAILED DESCRIPTION

Embodiments are described below with reference to the drawings. Features and technical effects of the embodiments will be understood from the following detailed description and the drawings. However, the scope of the present invention is not limited to the embodiments described below. The drawings are provided only for the purpose of exemplification, and thus the scope of the present invention is not limited to the exemplification in the drawings.

### <Outline of Information Processing System>

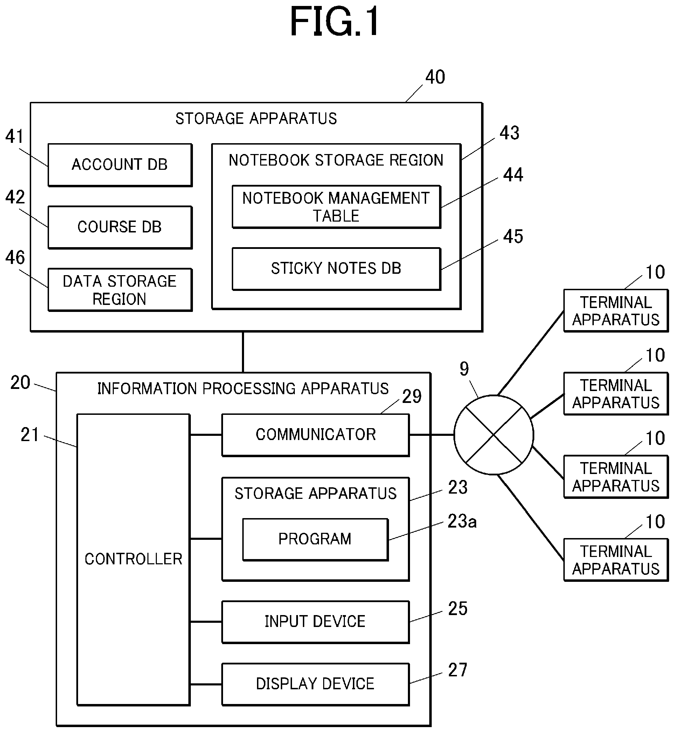

FIG. 1 is a block view that illustrates an overall configuration of an information processing system. The information processing system is used in school education. A school is, for example, an elementary school, a junior high school, a high school, a vocational school, a cram school, a preparatory school, or the like. At least one teacher, student, and administrator belong to each school, and accounts for these members are respectively allocated in the information processing system to these people, whereby these members are registered in the information processing system as registrants. A teacher may also serve as an administrator. An account for at least one system administrator, which is superior to an administrator, is allocated to a system administrator in the information processing system, whereby the system administrator is registered to the information processing system as a registrant.

The information processing system is provided with an information processing apparatus 20, a storage apparatus 40, and plurality of terminal apparatuses 10.

A terminal apparatus 10 is used by a registrant, and the terminal apparatus 10 accesses the information processing apparatus 20. Each terminal apparatus 10 is, for example, a computer such as a mobile telephone, a smartphone, a tablet computer, a laptop computer, or a desktop computer. The terminal apparatus 10 has a controller, and the controller has a central processing unit (CPU), a random-access memory (R_AM), a graphics processing unit (GPU), a main board, and the like. The controller executes various processes to thereby be responsible for controlling the entirety of the terminal apparatus 10. The terminal apparatus 10 has, for example, an input device such as a touch panel, a mouse, a touchpad, a stylus, a pointing device, a keyboard, or a push button. The terminal apparatus 10 recognizes and obtains input information that corresponds to details of an operation that a registrant, who uses the terminal apparatus 10, makes with respect to the input device. The terminal apparatus 10 is provided with an image capturing device. The terminal apparatus 10 obtains an image that is generated by the image capturing device capturing a photographic subject. The image is a still image or a video. The terminal apparatus 10 has a display device, such as a liquid-crystal display device or an organic electro luminescence (EL) display device, for example. The terminal apparatus 10 displays a screen, which is based on processing by the controller, on the display device. The terminal apparatus 10 has a communicator such as a mobile telephone line communication module, a network card, or a Wi-Fi (registered trademark) adapter. The terminal apparatus 10 is connected through the communicator to an information communication network 9 such as the internet. The terminal apparatus 10 can access the information processing apparatus 20 through the network 9. A secure communication protocol such as a virtual private network (VPN) or the like, for example, may be employed for communication between the terminal apparatus 10 and the information processing apparatus 20.

The terminal apparatus 10 is installed with an operating system (OS) as well as an application program that can be executed on the OS. The application program may be able to be operated by web browser software. The terminal apparatus 10 accesses the information processing apparatus 20 on the basis of the application program, sends and receives information to and from the information processing apparatus 20, and displays details of information provided from the information processing apparatus 20 on the display device.

The information processing apparatus 20 is a host machine for a server that is configured by a computer system. The information processing apparatus 20 may be configured from one computer system, or may be configured from a plurality of computer systems that are capable of distributed processing or parallel processing. The information processing apparatus 20 may be a cloud computing system.

The storage apparatus 40, which serves as a storage, is a semiconductor storage apparatus, a magnetic storage apparatus, network-attached storage (NAS), a data server, a file server, or a cloud computing system. The storage apparatus 40 may be incorporated in the information processing apparatus 20. The storage apparatus 40 may be externally attached to the information processing apparatus 20. It may be that the storage apparatus 40 is connected to the network 9 or another network, and the information processing apparatus 20 is able to access the storage apparatus 40 via the network 9 or the other network. The information processing apparatus 20 records information to the storage apparatus 40, and reads out information that has been recorded to the storage apparatus 40.

A teacher, as a registrant, uses their own terminal apparatus 10 at the time of a course or the like to access the information processing apparatus 20, and login to their own account. A student, as a registrant, uses their own terminal apparatus 10 to access the information processing apparatus 20 and login to their own account. Accordingly, the teacher can use the information processing system to thereby share information with students throughout the course, communicate with the students, and share with the students various content (for example, digital textbooks, various items of dictionary data, and videos of teaching material) as well as various tools (for example, a calculator tool, a scientific calculator tool, a graph creation tool, a shape creation tool, a dictionary tool, and a digital note tool) that are installed in the information processing apparatus 20. In addition, students can share information, communicate with each other, and share the various tools and various content installed in the information processing apparatus 20 with each other, through the information processing system at the time of a course or the like.

An administrator who corresponds to a registrant uses their own terminal apparatus 10 to access the information processing apparatus 20 and is responsible for various kinds of management. Management by an administrator includes: (1) registering, deleting, and changing teacher accounts; (2) registering, deleting, and changing student accounts; (3) registering, deleting, and changing classes; (4) associating and de-associating teacher accounts with classes; (5) associating and de-associating student accounts with classes; (6) registering, deleting, and changing courses; (7) associating and de-associating teacher accounts with courses; (8) associating and de-associating student accounts with courses; and the like.

### <Information Processing Apparatus>

The information processing apparatus 20 is provided with a controller 21 (hardware processor), a storage apparatus 23, an input device 25, a display device 27, and a communicator 29.

The controller 21 is responsible for overall control of the information processing apparatus 20. The controller 21 is a computer that has a CPU, a RAM, a GPU, a main board, and the like. The CPU performs various computational processes. At the time of a computational processing by the CPU, the RAM provides the CPU with a storage region or a work region. The GPU, under command by the CPU, performs processing that can be carried out at higher speed than by the CPU (for example, image processing and matrix computational processing). The main board has a bus, a bus controller, an interface circuit, and the like, and transmits information to and from the CPU, RAM, GPU, storage apparatus 23, input device 25, display device 27, and communicator 29.

The input device 25 is an input apparatus such as a touch panel, a mouse, a touchpad, a stylus, a pointing device, a keyboard, a key, or a push button. The input device 25 outputs, to the main board in the controller 21, a signal that corresponds to details of an operation performed by a user with respect to the input device 25.

The display device 27 may be a liquid-crystal display device or an organic EL display device, for example. The display device 27 displays a video that is in accordance with a video signal inputted from the main board in the controller 21.

The communicator 29 may be a network card or a Wi-Fi (registered trademark) adapter, for example. The communicator 29 is connected to the network 9 via a router or the like.

The storage apparatus 23 may be a memory device such as a hard disk drive (HDD) or solid-state drive (SSD), for example. An operating system (OS) is stored in the storage apparatus 23, and the OS is installed in the information processing apparatus 20 such that the OS is executed by the controller 21. The storage apparatus 23 stores a program 23a that controller 21, in particular the CPU, can execute on the OS.

### <Data Stored in Storage Apparatus>

The storage apparatus 40 stores various items of data that are used when the controller 21 executes the program 23a. Description is given in detail below regarding data that the storage apparatus 40 stores.

The storage apparatus 40 stores an account database 41. "Database" is abbreviated as DB below.

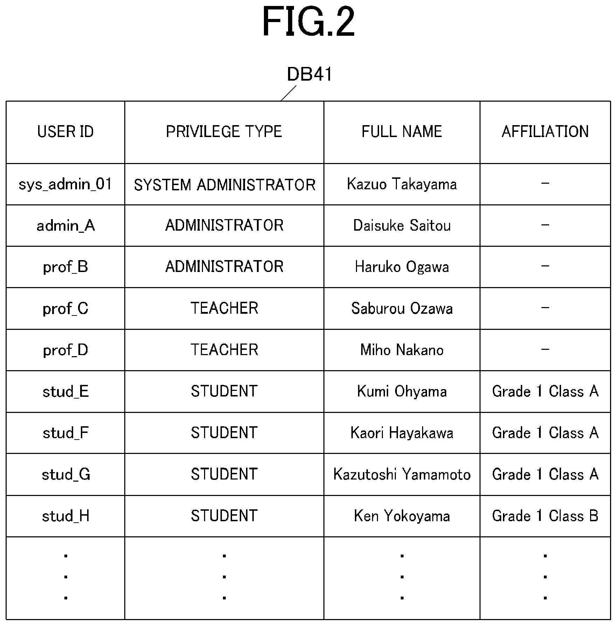

The account DB 41 for managing accounts that are allocated to registrants. As illustrated in FIG. 2, the account DB 41 has, for each registrant account, a user ID (identification), privilege type information, full name information, and affiliation information. For each registrant account, the user ID, privilege type information, and full name information are associated with each other. Age information, gender information, and location information may be associated with the user ID.

The user ID is an identification number that is allocated with the registrant account. The user ID is unique for each registrant account. The user ID identifies the registrant account. Note that a number in the present specification may include numerical characters, alphabetical characters, or symbols, or a combination of these.

The privilege type information expresses a type of privilege that is assigned to a registrant account. Types of privilege include "administrator", "teacher", "student", and "system administrator". The privilege type "administrator" is for a privilege that is assigned to the account of a registrant who is an administrator. The privilege type "teacher" is for a privilege that is assigned to the account of a registrant who is a teacher. The privilege type "student" is for a privilege that assigned to the account of a registrant who is a student. The privilege type "system administrator" is for a privilege that is assigned to the account of a registrant who is a system administrator. The full name information expresses the full name of the registrant. The age information expresses the age of the registrant. The gender information expresses the gender of the registrant. The affiliation information represents a class to which the registrant is affiliated, by a combination of the grade level and class number for the class. The location information expresses the address or residence of the registrant. Note that, separate from the account DB 41, the storage apparatus 40 stores, in an encrypted state, a verification DB that associates an authentic user ID and password for each registrant account. Each registrant can login to their own account, by using an authentication method that uses a user ID and password, as well as another type of authentication factor if necessary.

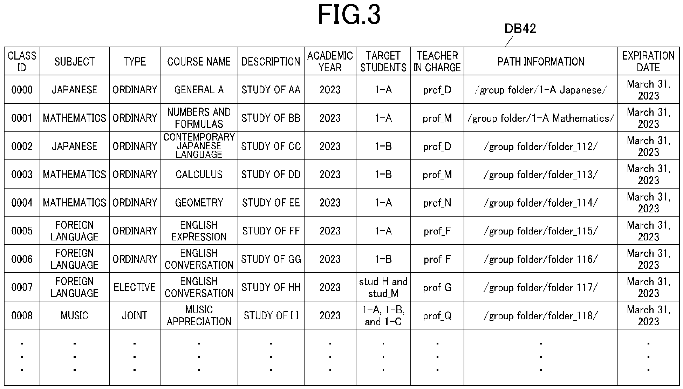

As illustrated in FIG. 1, the storage apparatus 40 stores a course DB 42. The course DB 42 is a database for managing courses. As illustrated in FIG. 3, the course DB 42 has, for each course, a course ID, subject information, type information, course name information, explanatory information, academic year information, target student information, teacher-in-charge information, path information, and expiration date information. In the course DB 42, a number, subject information, type information, course name information, explanatory information, academic year information, target student information, teacher-in-charge information, path information, and expiration date information are associated with each other for each course. In a case where an administrator who has logged in to their own account has created a new course, a course ID, subject information, type information, course name information, explanatory information, academic year information, target student information, teacher-in-charge information, path information, and expiration date information that pertain to the course are associated with each other and added to the course DB 42.

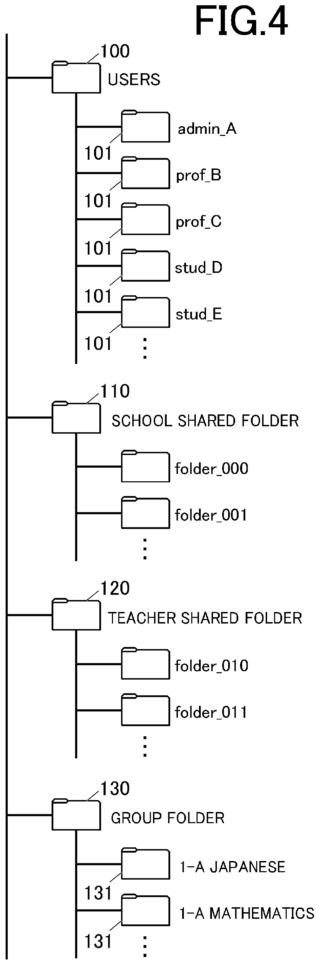

The course ID is an identification number that is allocated to a course. The course ID is unique for each course. Each course ID identifies a course. The subject information expresses the subject that is lectured on in the course, and more specifically is subject name information that expresses the name of the subject. The type information represents the type of course format, and types of course formats include "ordinary", "joint", and "elective". The course format for the type "ordinary" refers to a course in which students from a single class are lectured to. The course format for the type "joint" refers to a course in which students from a plurality of classes are jointly lectured to. The course format for the type "elective" refers to a course in which specific students are lectured to, irrespective of the class thereof. The course name information expresses the name of the course. The explanatory information is information that simply describes, inter alia, the objective or details of the course. The academic year information expresses a lecture time period for the course by an academic year. The target student information identifies accounts of target students for the course. In a case of a course where the type information is the type "ordinary" or the type "joint", the target student information identifies target student accounts by a combination of the grade level and class number of the class to which the target students are affiliated with. Accordingly, the target student information in the course DB 42 associates user IDs, which belong to target students in the account DB 41 who are associated with the same affiliation information as that of the target student information, with the course. In a case of a course for which the type information is the type "elective", the target student information identifies accounts of target students by the user IDs of the target students. Accordingly, the target student information in the course DB 42 associates user IDs, which are the same as that of the target student information, with the course. The teacher-in-charge information is the user ID of the teacher in charge of the course, and identifies the account of the teacher who is in charge of the course. The teacher-in-charge information associates the user ID, which is the same as that of the teacher-in-charge information, with the course. Users having user IDs associated with the course due to the target student information and the teacher-in-charge information form a specific group, and these users belong to the specific group. The specific group is a class for which the course is taught. The path information expresses a path to a shared folder 131 (refer to FIG. 4) that is allocated to the course. The path indicates the location of a shared folder 131. The shared folder 131 is a folder that is shared by accounts of the target students and teacher in charge, who are identified by the target student information and the teacher-in-charge information. In other words, the shared folder 131 is a storage region for storing information that is used by the target students and teacher in charge, who are identified by the target student information and the teacher-in-charge information. The expiration date information expresses an account to which a privilege with respect to the shared folder 131 has been assigned, as well as an expiration date for this privilege. The expiration date is the last day of an academic year that is identified by academic year information, for example. The expiration date may be something other than the last day of an academic year. The shared folder 131 and the expiration date information are described in detail below.

As illustrated in FIG. 1, a notebook storage region 43 is set in the storage apparatus 40. The storage apparatus 40 stores a notebook management table 44 and a sticky note DB 45 in the notebook storage region 43.

The notebook management table 44 is for managing information pertaining to notebooks that are created by registrants when the program 23a is executed. The notebook management table 44 has, for each notebook, a notebook ID, notebook name information, notebook creator information, target course information, and the like. The notebook ID, notebook name information, notebook creator information, target course information, and the like are associated with each other for each notebook. In a case where a student or teacher who has logged into their own account creates a new notebook, a notebook ID, notebook creator information, target course information, and the like that pertain to the notebook are associated with each other and added to the notebook management table 44. Note that creation of a new notebook may be referred to as the addition thereof.

The notebook ID is an identification number that is allocated to a notebook. The notebook ID is unique for each notebook. Each notebook ID identifies a notebook. The notebook name information expresses the name of the notebook. The notebook creator information expresses the account of the creator who created the notebook. The account of the teacher or student who was allocated the same user ID as that of the notebook creator information is the account of the creator of the notebook. The target course information represents a course in which the notebook is used as well as a course ID that is allocated to this course. When a course that is allocated the same course ID as that of the target course information is selected, the account of a student or teacher who is allocated the same user ID as that of the notebook creator information can edit the notebook. Editing a notebook refers to adding to or deleting from the notebook. Furthermore, editing a notebook also refers to adding, deleting, or updating an electronic sticky note (may be simply referred to as a "sticky note" below) that is attached to the notebook. Note that attached sticky note information may be associated with the notebook ID, the notebook creator information, and the target course information. The attached sticky note information identifies a sticky note that is attached to the notebook. A sticky note that is allocated the same sticky note ID as that of the attached sticky note information is attached to a notebook, which is identified by a notebook ID that is associated with the attached sticky note information.

The sticky note DB 45 is a database for managing information pertaining to sticky notes that are created by a registrant when the program 23a is executed. The sticky note DB 45 has, for each sticky note, a sticky note ID, attachment destination information, sticky note creator information, type information, and content information. The sticky note ID, attachment destination information, sticky note creator information, type information, and content information are associated with each other for each sticky note. In a case where a student or teacher who is logged into their own account has selected a notebook and created a new sticky note in this notebook, a sticky note ID, attachment destination information, sticky note creator information, type information, and content information that pertain to this sticky note are associated with each other and added to the sticky note DB 45.

The sticky note ID is an identification number that is allocated to a sticky note. The sticky note ID is unique for each sticky note. Each sticky note ID identifies a sticky note. The attachment destination information represents the notebook, to which the sticky note is attached, by the notebook ID allocated to the notebook. The notebook that is allocated the same notebook ID as that of the attachment destination information is the attachment destination of the sticky note. The sticky note creator information represents the creator, who created the sticky note, by the user ID of the creator. The account of the teacher or student who was allocated the same user ID as that of the creator information is the account of the creator of the sticky note. The type information identifies the type of the sticky note. Sticky note types include "text sticky note", "camera sticky note", "link sticky note", "file sticky note", "dictionary sticky note", and the like. The content information indicates the content of the sticky note. The content information is, for example, information such as a character string, a still image, a video, or the like. The content information may include information pertaining to display settings, such as a display position for the sticky note in the notebook, a display size, and a display color.

As illustrated in FIG. 1, a data storage region 46 is set in the storage apparatus 40. FIG. 4 is a view that exemplifies a hierarchical structure for the data storage region 46. As illustrated in FIG. 4, a folder of users 100, a school shared folder 110, a teacher shared folder 120, and a group folder 130 are registered in the data storage region 46.

A plurality of user folders 101 are registered under the folder of users 100. A user folder 101 is set for each account, and the account of a registrant is allocated to each user folder 101. Association of the account of a registrant with a user folder 101 is, for example, represented by path information expressing the path to the user folder 101 being associated with a user ID in the account DB 41.

A registrant account that is associated with the user folder 101 has a display privilege for the user folder 101, and has privileges for displaying, reading, writing, and deleting subfolders and data that is under the user folder 101. From among the sticky note DB 45, a student account associated with a user folder 101 can copy and store type information and content information, which is associated with creator information that is the same as the user ID of the account, as a sticky note that is under the user folder 101. An administrator account may have a privilege for displaying, reading, writing, and deleting all user folders 101 as well as folders and data thereunder. A system administrator account has a privilege for displaying, reading, writing, and deleting all user folders 101 as well as folders and data thereunder.

The school shared folder 110 is shared by the accounts of students and teachers who are affiliated with the same school. The accounts of students and teachers who are affiliated with the same school have a display privilege for the school shared folder 110, and have privileges for displaying, reading, writing, and deleting subfolders and data under the school shared folder 110. It may be that privileges for writing and deleting subfolders and data that are under the school shared folder 110 are granted to accounts that created them, and are not granted to the accounts of other students or teachers. An administrator account may have a privilege for displaying, reading, writing, and deleting the school shared folder 110 as well as all folders and data thereunder. A system administrator account has a privilege for displaying, reading, writing, and deleting the school shared folder 110 as well as all folders and data thereunder.

The teacher shared folder 120 is shared by the accounts of teachers who are affiliated with the same school. Student accounts do not have privileges for displaying, reading, writing, or deleting the teacher shared folder 120, and also do not have privileges for displaying, reading, writing, or deleting subfolders and data that are under the teacher shared folder 120. The accounts of teachers who are affiliated with the same school have a display privilege for the school shared folder 110, as well as privileges for displaying, reading, writing, and deleting subfolders and data under the teacher shared folder 120. It may be that privileges for writing and deleting subfolders and data that are under the teacher shared folder 120 are granted to accounts that created them, and are not granted to the accounts of other teachers.

A plurality of shared folders 131 are registered under the group folder 130. A shared folder 131 is set for each course, and the courses are respectively associated with the shared folders 131. Specifically, the path information in the course DB 42 expresses the path to the shared folder 131, and the association between the path information and the course ID becomes the association between the shared folder 131 and the course.

The shared folder 131 is shared between the account of the teacher in charge who teaches the course, and the accounts of target students who are taught the course. Specifically, accounts of target students who are identified by the target student information in the course DB 42 have a display privilege for the shared folder 131, and also have privileges for displaying, reading, writing, and deleting subfolders and data under the shared folder 131. The account of the teacher in charge who is identified by the teacher-in-charge information in the course DB 42 has a display privilege for the shared folder 131, and also has privileges for displaying, reading, writing, and deleting subfolders and data under the shared folder 131. An expiration date, which is for privileges of the accounts of the target students and the teacher in charge and is with respect to the shared folder 131 as well as subfolders and data thereunder, is identified by expiration date information. When the expiration date, which is identified by the expiration date information, arrives, the privileges of the accounts of the target students and the teacher in charge with respect to the shared folder 131 as well as the subfolders and data thereunder will be set to disabled. Note that, if the expiration date identified by the expiration date information has passed, the shared folder 131 as well as the subfolders and data thereunder either remain under the group folder 130 or are moved to be under an archive folder by the information processing apparatus 20.

The accounts of students and teachers who are not target students or the teacher in charge do not have privileges for displaying, reading, writing, or deleting the shared folder 131, and also do not have privileges for displaying, reading, writing, or deleting subfolders and data that are under the shared folder 131.

An administrator account may have a privilege for displaying, reading, writing, and deleting all shared folders 131 as well as all folders and data thereunder. An expiration date, which is for privileges of the accounts of the administrator account and is with respect to each shared folder 131 as well as subfolders and data thereunder, is identified by expiration date information. After the expiration date, which is identified by the expiration date information, passes, the privileges of administrator accounts with respect to the shared folder 131 as well as the subfolders and data thereunder are set to disabled.

A system administrator account has privileges for displaying, reading, writing, and deleting all shared folders 131 as well as folders and data thereunder, irrespective of whether the expiration date identified by the expiration date information has passed.

It may be that all or some of the various items of data, which are stored in the storage apparatus 40 and are described above, are stored in the storage apparatus 23, and the controller 21 reads data from the storage apparatus 23.

### <Course Registration Function in Information Processing Apparatus>

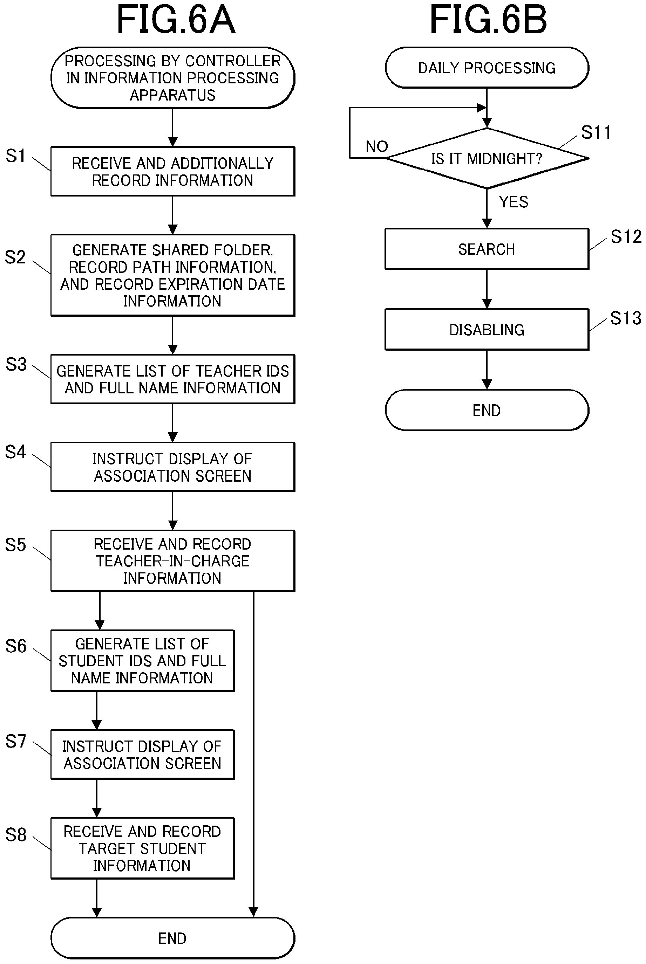

Description is given regarding a method by which an administrator uses their own terminal apparatus 10 to register a new course to the course DB 42. With reference to FIG. 6A, description is also given regarding a flow of processing that the program 23a causes the controller 21 to execute.

An administrator uses the input device of their own terminal apparatus 10 to instruct execution of an application program. When execution of an application program is instructed by the administrator, the terminal apparatus 10 activates the application program and, in accordance with details of control by the application program, accesses the information processing apparatus 20 via the network 9. The controller 21 in the information processing apparatus 20 transmits a login screen to the terminal apparatus 10, and the terminal apparatus 10 displays the login screen that is received from the information processing apparatus 20. When the administrator inputs their own user ID and password in the login screen to thereby issue a command for logging in, the terminal apparatus 10 transmits the ID and password to the information processing apparatus 20. The controller 21 in the information processing apparatus 20 performs a verification process of verifying the ID and password received from the terminal apparatus 10 against verification data. Upon using the verification process to authenticate the authenticity of the user ID and the password, the controller 21 in the information processing apparatus 20 permits login for the account corresponding to the user ID. Subsequently, the controller 21 temporarily stores the logged-in user ID until logout.

After permitting login to the account of the administrator, the controller 21 in the information processing apparatus 20 transmits a management screen to the terminal apparatus 10, and the terminal apparatus 10 displays the management screen. On the management screen, the administrator inputs a command to transition to a registration screen for a course. The terminal apparatus 10 accepts the input of this command, transfers the inputted command to the controller 21 in the information processing apparatus 20, and the controller 21 receives the command. Accordingly, the controller 21 transmits registration screen display data, which is for causing display of a registration screen, to the terminal apparatus 10.

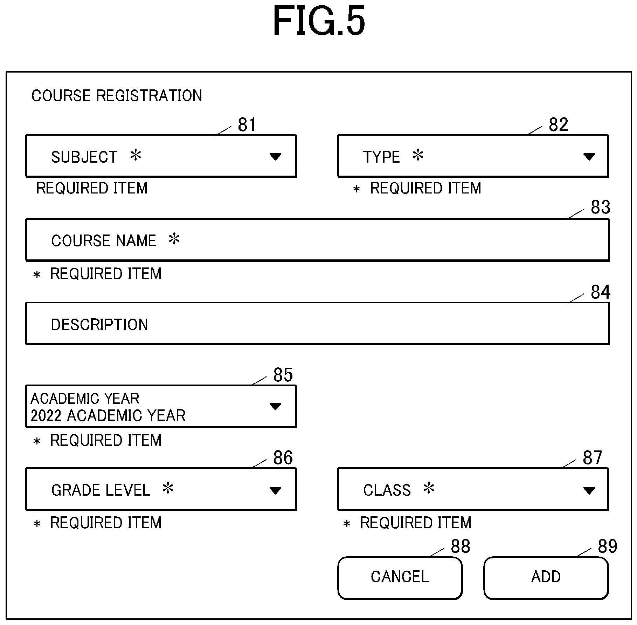

Upon receiving the registration screen display data from the controller 21, the terminal apparatus 10 displays the registration screen in accordance with the registration screen display data. FIG. 5 illustrates an example of a registration screen. As illustrated in FIG. 5, objects 81 through 89 are disposed in the registration screen. The objects 81 through 89 are elements that form part of a graphical user interface (GUI) to which content, which reflects operations by an administrator, is reflected.

The object 81 is a list box or a drop-down list that gives at least one item of subject information as an option. An administrator operates a terminal apparatus 10, whereby the object 81 is activated, at least one item of subject information is displayed as a list by the object 81, and any one option is selected from among the list.

The object 82 is a list box or a drop-down list that gives as options a plurality of types pertaining to course formats - in other words the type "ordinary", the type "joint", and the type "elective". The administrator operates the terminal apparatus 10, whereby the object 82 is activated, the plurality of types pertaining to course formats are displayed as a list by the object 82, and any one option is selected from among the list. In a case where the type "ordinary" is selected in the object 82, one group of the object 86 and the object 87 is disposed in the registration screen. In a case where the type "joint" is selected in the object 82, a plurality of groups of the object 86 and the object 87 is disposed in the registration screen. In a case where the type "elective" is selected in the object 82, the object 86 and the object 87 are hidden.

The object 83 is a text box for the input of a course name. The administrator operates the terminal apparatus 10, whereby the object 83 is activated and text that expresses the course name is inputted to the object 83.

The object 84 is a text box for inputting a course description, such as a course objective or course details. The administrator operates the terminal apparatus 10, whereby the object 84 is activated and text that expresses the course description is inputted to the object 84.

The object 85 is a list box or a drop-down list that gives a plurality of candidates as options for the academic year during which lectures for the course are given. When an administrator operates the input device for the terminal apparatus 10 to thereby activate the object 85, the plurality of candidates are displayed as a list by the object 85, and any one option is selected from among the list.

The object 86 is a list box or a drop-down list that gives a plurality of grade levels as options. The administrator operates the terminal apparatus 10, whereby the object 86 is activated, the plurality of grade levels are displayed as a list by the object 86, and any one option is selected from among the list.

The object 87 is a list box or a drop-down list that gives, as an option, at least one class that belongs to the grade level selected in the object 86, as an option. An administrator operates a terminal apparatus 10, whereby the object 87 is activated, the at least one class is displayed as a list by the object 87, and any one option is selected from among the list.

The object 88 is a cancel command button for returning to the management screen from the registration screen, without accepting any selection or input made using the objects 81 through 86.

The object 89 is a command button for determining a selection or input that is made using the objects 81 through 86. Note that, in addition to the objects 81 through 89, any kind of object - such as a date input form, list box, drop-down list, or text box for inputting the expiration date - may be disposed in the registration screen.

The administrator operates the terminal apparatus 10 to select one option from among the list in each of the objects 81, 82, 85, 86, and 87, inputs the course name as text in the object 83, also inputs a course description as text in the object 84, and then makes a determination by selecting the object 89. Accordingly, the terminal apparatus 10 obtains the option in the object 81 as subject information, obtains the option in the object 82 as type information, obtains the input text in the object 82 as course name information, obtains the input text in the object 83 as explanatory information, obtains the option in the object 85 as academic year information, and obtains a combination of the options in the object 86 and the object 87 as affiliation information (target student information). The terminal apparatus 10 transmits these items of information to the information processing apparatus 20, and the controller 21 in the information processing apparatus 20 receives these items of information (step S1). The controller 21 in the information processing apparatus 20 creates a new course ID, subsequently associates the received subject information, type information, course name information, explanatory information, academic year information, and affiliation information (target student information) with the new course ID, and records a combination of the course ID, subject information, type information, course name information, explanatory information, academic year information, and affiliation information (target student information) to the storage apparatus 40 such that the combination is added to the course DB 42 (step S1). Note that, in a case where the administrator has selected the type "elective" in the object 82, the terminal apparatus 10 does not transmit affiliation information (target student information), and the controller 21 does not record affiliation information (target student information).

Next, the controller 21 generates a shared folder 131 under the group folder 130, and obtains a path to the shared folder 131 (step S2). The controller 21 associates path information, which states the obtained path, with the new course ID, and records the path information in the storage apparatus 40 such that the path information is added to the course DB 42 (step S2). Furthermore, on the basis of the academic year information, the controller 21 obtains the last day of the academic year as the expiration date. The controller 21 associates expiration date information, which states the obtained expiration date, with the new course ID, and records the expiration date information in the storage apparatus 40 such that the expiration date information is added to the course DB 42 (step S2).

Next, the controller 21 extracts user IDs and full name information for accounts having the privilege type "teacher" from the account DB 41, and generates a list in which the user IDs and full name information are given as options for a teacher-in-charge candidate (step S3). Next, the controller 21 transmits, to the terminal apparatus 10, first association screen display data for causing display of a first association screen that includes this list (step S4). The first association screen display data includes command data for causing the first association screen to display user IDs and full name information of accounts having the privilege type "teacher" as options for a teacher-in-charge candidate.

Upon receiving the first association screen display data from the controller 21, the terminal apparatus 10 displays the first association screen in accordance with the first association screen display data. Disposed on the first association screen is a list box or a drop-down list that gives user IDs and full name information for accounts having the privilege type "teacher" as options for a teacher-in-charge candidate.

The administrator uses an operation on the terminal apparatus 10 to select one option from among the list in the list box or drop-down list that is in the first association screen. Accordingly, the terminal apparatus 10 obtains the selected option as teacher-in-charge information. The terminal apparatus 10 transmits this teacher-in-charge information to the information processing apparatus 20, and the controller 21 in the information processing apparatus 20 receives this teacher-in-charge information (step S5). The controller 21 associates this teacher-in-charge information with a new course ID, and records the teacher-in-charge information to the storage apparatus 40 such that the teacher-in-charge information is added to the course DB 42 (step S5).

In a case where the administrator has selected the type "ordinary" or the type "joint" in the object 82 described above, processing by the controller 21 in relation to course registration ends after adding the teacher-in-charge information. In contrast, in a case where the administrator has selected the type "elective" in the object 82 described above, after adding the teacher-in-charge information, the controller 21 extracts user IDs and full name information for accounts having the privilege type "student" from the account DB 41, and generates a list of user IDs and full name information, giving the user IDs and full name information as options for target student candidates (step S6). Next, the controller 21 transmits, to the terminal apparatus 10, second association screen display data for causing display of a second association screen (step S7). The second association screen display data includes command data for causing the second association screen to display user IDs and full name information of accounts having the privilege type "student" as options for target student candidates.

Upon receiving the second association screen display data from the controller 21, the terminal apparatus 10 displays the second association screen in accordance with the second association screen display data. Disposed on the second association screen is a list box or a drop-down list that gives user IDs and full name information for accounts having the privilege type "student" as options for target student candidates.

The administrator uses an operation with respect to the terminal apparatus 10 to select one option from among the list in the list box or drop-down list that is in the second association screen. Accordingly, the terminal apparatus 10 obtains the selected option as target student information. The terminal apparatus 10 transmits this target student information to the information processing apparatus 20, and the controller 21 in the information processing apparatus 20 receives this target student information (step S8). The controller 21 associates this target student information with a new course ID, and adds the target student information to the course DB 42 (step S8) . Processing by the controller 21 in relation to course registration ends after addition of the target student information.

Note that an account that has the privilege type "teacher" but lacks the privilege type "administrator" may or may not have a privilege for registering a new course to the course DB 42, similarly to an account having the privilege type "administrator".

### <Daily Processing by Information Processing Apparatus>

With reference to FIG. 6B, description is given regarding daily processing that the controller 21 in the information processing apparatus 20 executes every day. Once the controller 21 recognizes that the current time is midnight, for example, (step S11: YES), the controller 21 refers to the course DB 42 to thereby search for path information, teacher-in-charge information and target student information that are associated with expiration date information corresponding to before the current time (step S12) .

Next, the controller 21 disables a display privilege that was set to the shared folder 131 that is expressed by the path in path information that is found (step S13). Furthermore, the controller 21 disables display, read, write, and delete privileges that were set with respect to folders and data under the shared folder 131 (step S13). Furthermore, the controller 21 disables a display privilege that is for the shared folder 131 and was assigned to each account having a user ID that is identified by the teacher-in-charge information or the target student information (step S13). Furthermore, the controller 21 disables a display, read, write, and delete privileges that are for folders and data under the shared folder 131 and were assigned to each account having a user ID that is identified by the teacher-in-charge information or the target student information (step S13).

### <Course Support Function in Information Processing Apparatus>

Description is given regarding a method in which each student and teacher uses their own terminal apparatus 10 to access the information processing apparatus 20 at the time of a course, logs into their own account, and edits a notebook or a sticky note. Description is also given regarding a flow of processing that the program 23a causes the controller 21 to execute. Note that operation by the terminal apparatus 10 and the information processing apparatus 20 when a teacher edits a notebook and sticky notes is similar to operation by the terminal apparatus 10 and the information processing apparatus 20 when a student edits a notebook and sticky notes.

A teacher logs into their own account similarly to how an administrator logs into their own account. Processing executed by the information processing apparatus 20 and the terminal apparatus 10 belonging to the teacher in this case is similar to processing executed by the information processing apparatus 20 and the terminal apparatus 10 belonging to the administrator when the administrator logs in.

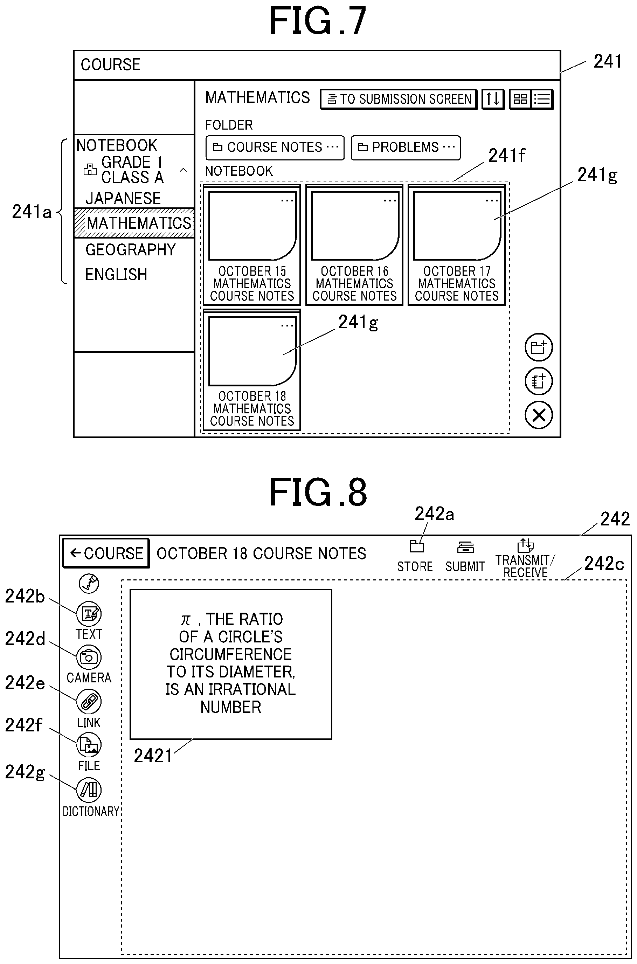

After the teacher logs in, the controller 21 in the information processing apparatus 20 refers to the notebook management table 44 to thereby identify a course ID from target course information that is associated with notebook creator information that is the same as the user ID of the account that is logged in. Furthermore, the controller 21 refers to the course DB 42 to thereby identify subject information or course name information that is associated with the identified course ID. The controller 21 causes the terminal apparatus 10 to display a course screen that is in accordance with the identified subject information or course information. FIG. 7 illustrates an example of a course screen 241 that is displayed by the terminal apparatus 10. The identified subject information or course information is displayed as items in a list 241a within the course screen 241. When a teacher operates the terminal apparatus 10 to thereby select any item of subject information or course information from among the list 241a, the terminal apparatus 10 accepts this selection and transmits the acceptance of this selection to the information processing apparatus 20. In the example illustrated in FIG. 7, the subject information or course information "mathematics" has been selected.

Upon receiving acceptance of the selection, the controller 21 in the information processing apparatus 20 refers to the course DB 42 to thereby identify the course ID associated with the selected item of subject information or course information, and refers to the notebook management table 44 to thereby identify notebook name information and a notebook ID that are associated with target course information that is the same as the course ID. The controller 21 causes the terminal apparatus 10 to display, in a notebook display region 241f that is within the course screen 241, the identified notebook name information and a notebook icon 241g. Note that, once the teacher has operated the terminal apparatus 10 to thereby add a new notebook, the controller 21 causes the terminal apparatus 10 to display an additional notebook icon 241g, and adds the new notebook ID, notebook name information, notebook creator information, and target course information to the notebook management table 44.

The teacher operates the terminal apparatus 10 to thereby select any notebook icon 241g. Selection of a notebook icon 241g corresponds to selecting a notebook ID that corresponds to the notebook icon 241g. The terminal apparatus 10 accepts this selection, transmits this acceptance of the selection to the information processing apparatus 20, and the controller 21 in the information processing apparatus 20 receives the acceptance of the selection. The controller 21 refers to the sticky note DB 45, and reads the sticky note ID, type information, and content information belonging to a sticky note that is associated with attachment destination information and sticky note creator information, said attachment destination information being the same as the notebook ID corresponding to the selected notebook icon 241g and said sticky note creator information being the same as the user ID of the logged-in account. The controller 21 causes the terminal apparatus 10 to display a notebook screen that corresponds to the selected notebook. FIG. 8 illustrates an example of a notebook screen 242 that is displayed by the terminal apparatus 10. When displaying the notebook screen 242, the controller 21 causes the terminal apparatus 10 to display a sticky note 2421, which is based on the content information and the type information thereof, in a sticky note display region 242c within the notebook screen 242. Note that, a sticky note is not displayed in the sticky note display region 242c in a case where a sticky note has not been attached to the selected notebook.

In a case where the teacher has operated the terminal apparatus 10 to thereby have selected the sticky note 2421 and edited the sticky note 2421, the controller 21 executes an edit process on the sticky note 2421 in accordance with the operation of the terminal apparatus 10 by the teacher, updates the type information and content information for the sticky note 2421 in the sticky note DB 45, and causes the terminal apparatus 10 to perform an updated display of the edited sticky note 2421.

For example, a text sticky note button 242b, a camera sticky note button 242d, a link sticky note button 242e, a file sticky note button 242f, and a dictionary sticky note button 242g are disposed in the left portion of the notebook screen 242. In a case where the teacher has operated the terminal apparatus 10 to thereby select the text sticky note button 242b, the camera sticky note button 242d, the link sticky note button 242e, the file sticky note button 242f, or the dictionary sticky note button 242g, the terminal apparatus 10 accepts this selection, and transmits acceptance of this selection to the information processing apparatus 20. Accordingly, the controller 21 executes an edit process for a new sticky note in accordance with the teacher operating the terminal apparatus 10, adds a sticky note ID, attachment destination information, sticky note creator information, type information, and content information for the new sticky note to the sticky note DB 45, and causes the terminal apparatus 10 to additionally display the new sticky note within the sticky note display region 242c.In the case of editing of a sticky note as above, the controller 21 causes the terminal apparatus 10 to display an editing screen that corresponds to the type information.

Note that details of processing that the information processing apparatus 20 executes on the basis of the program 23a when editing a notebook or a sticky note, and processing that the terminal apparatus 10 executes in collaboration with the information processing apparatus 20 are described in the filing documents for Japanese Patent Application No. 2023-000130 and Japanese Patent Application No. 2023-029904. The entire contents set forth in the filing documents for Japanese Patent Application No. 2023-000130 and Japanese Patent Application No. 2023-029904 are incorporated herein by reference.

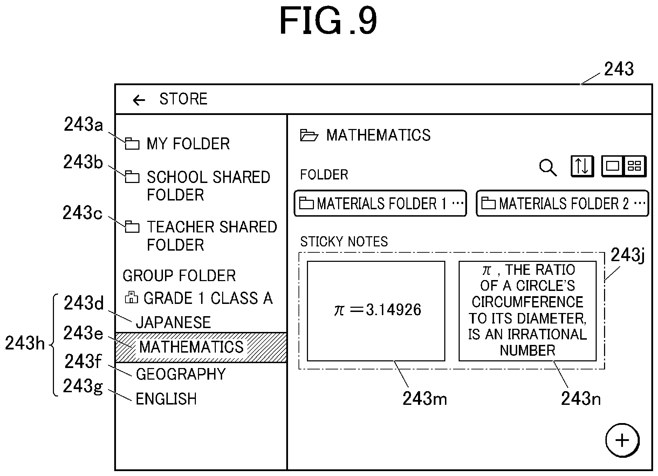

A storage button 242a is disposed in the top portion of the notebook screen 242. The teacher operates the terminal apparatus 10 to thereby press the storage button 242a while the sticky note 2421 is selected. Such a press causes the terminal apparatus 10 to recognize a command for storing the sticky note 2421, and the terminal apparatus 10 transfers a command for storing the sticky note 2421 to the information processing apparatus 20. Having received this command, the controller 21 in the information processing apparatus 20 determines display content on the basis of the privileges and expiration date information assigned to the account that the teacher is logged into. Furthermore, the controller 21 refers to the course DB 42 to determine display content on the basis of course name information or subject information, which is before the expiration date and is associated with teacher-in-charge information that is the same as the user ID of the teacher's account. The controller 21 transmits, to the terminal apparatus 10, screen display data for causing display of such display content. Upon receiving the screen display data from the controller 21, the terminal apparatus 10 displays a sticky note storage screen 243 as in FIG. 9, in accordance with the screen display data. Icons 243a through 243c are disposed in the left portion of the sticky note storage screen 243. The icon 243a is for the user folder 101 that is allocated to the account to which the teacher is logged into. The icon 243b is for the school shared folder 110. The icon 243c is for the teacher shared folder 120. Note that, in the case of an account to which a student is logged into, display privileges for the teacher shared folder 120 would not be granted to this account, and the icon 243c would not be displayed.

A list 243h that includes icons 243d through 243g is disposed in the left portion of the sticky note storage screen 243. These icons 243d through 243g are disposed at the same rank as the icons 243a through 243c so as to be disposed contiguous with the icons 243a through 243c. Subject information or course name information that is before the expiration date are each displayed by the icons 243d through 243g. The icons 243d through 243g correspond to shared folders 131 that the account to which the teacher is logged into has been assigned display privileges, which are before the expiration date thereof. Note that after the expiration dates elapse, the display privileges will be disabled, and the icons 243d through 243g will be hidden.

The teacher operates the terminal apparatus 10 to thereby select one of the icons 243a through 243g. Such a selection transfers a command to store the sticky note 2421 to the information processing apparatus 20. Having received the command, the controller 21 in the information processing apparatus 20 copies the type information and content information of the sticky note 2421 in the sticky note DB 45 to the folder corresponding to the icon that was selected from among the icons 243a through 243g. In the example illustrated in FIG. 9, the icon 243e that indicates the subject information or course name information "mathematics" is selected by the teacher. Therefore, the controller 21 copies the type information and content information of the sticky note 2421 as sticky note information to the shared folder 131 identified by the path information associated with the subject information or course name information "mathematics".

Displayed in the right portion of the sticky note storage screen 243 are icons or the like for subfolders and data that is registered under the folder corresponding to the icon selected from among the icons 243a through 243g. In the example illustrated in FIG. 9, when the icon 243e that displays the subject information or course name information "mathematics" is selected by the teacher, the controller 21 causes the terminal apparatus 10 to additionally display, in the right portion of the sticky note storage screen 243, icons or the like for subfolders and data that is registered under the shared folder 131 identified by the path information associated with the subject information or course name information "mathematics". In particular, the controller 21 causes the terminal apparatus 10 to additionally display, in the right portion of the sticky note storage screen 243, a sticky note 242m that is based on sticky note information registered under the shared folder 131. In addition, when the controller 21 has copied type information and content information for the sticky note 2421 to the shared folder 131 as sticky note information, the controller 21 causes the terminal apparatus 10 to additionally display, in the right portion of the sticky note storage screen 243, a sticky note 242n that is based on this sticky note information.

Note that, even in a case where the teacher has operated the terminal apparatus 10 to thereby issue a command for moving or copying data other than a sticky note to the shared folder 131 or a command for newly creating such data in the shared folder 131, the controller 21 moves, copies, or newly creates such data.

### <Summary>

When an administrator registers a course, the controller 21 in the information processing apparatus 20 newly creates a shared folder 131 that is to be used in this course. The controller 21 associated target student information and teacher-in-charge information with path information for the shared folder 131. As a result, the controller 21 grants privileges for displaying, reading, writing, and deleting with respect to the shared folder 131 and folders and data thereunder to accounts for target students and the teacher in charge that are identified by the target student information and the teacher-in-charge information. Such a shared folder 131 contributes to facilitating sharing of information between the target students and the teacher in charge.

After an expiration date elapses, the privileges for displaying, reading, writing, and deleting, which are with respect to the shared folder 131 and the folders and data thereunder and were assigned to the accounts for the target students and the teacher in charge, are disabled. Accordingly, the target students and the teacher in charge are released from the trouble of organizing old data. As described hereinbefore, the interaction process between the users (target students and teacher in charge) and the information processing device 20 can reliably support the users in executing technical tasks (sharing information between target students and teacher in charge and organizing information).

## Claims

1. An information processing apparatus (20) comprising a hardware processor (21) that:
generates, in accordance with a command by a specific user, a storage region that is for storing information used by a plurality of users who belong to a specific group and that is set with an expiration date; and
displays an icon that corresponds to the storage region on screens of terminals (10) that are respectively operated by the plurality of users until the expiration date arrives.

2. The information processing apparatus according to claim 1, wherein the specific group is a class to which a course is to be taught.

3. The information processing apparatus according to claim 1 or 2, wherein the hardware processor disposes at a same rank the icon and a second icon that is disposed in each of the screens.

4. The information processing apparatus according to claim 1 or 2, wherein the hardware processor hides the icon after the expiration date arrives.

5. The information processing apparatus according to claim 1 or 2, wherein the expiration date is set in accordance with a command from the specific user.

6. An information processing system, comprising: an information processing apparatus (20); and a terminal (10) that is operated by a user who belongs to a specific group,
wherein the information processing apparatus:
generates, in response to operation of the terminal by a specific user who belongs to the specific group, a storage region in a storage that is managed by the information processing apparatus,
wherein the storage region is for storing information used by a plurality of users who belong to the specific group, and is set with an expiration date; and
displays an icon that corresponds to the storage region on display screens of the terminals that are respectively operated by the plurality of users until the expiration date arrives.

7. The information processing system according to claim 6, wherein the specific group is a class to which a course is to be taught.

8. The information processing system according to claim 6 or 7, wherein the information processing apparatus disposes at a same rank the icon and a second icon that is disposed in each of the screens.

9. An information processing method that is executed by an information processing apparatus (20), the information processing method comprising:
generating, in accordance with a command by a specific user, a storage region that is for storing information used by a plurality of users who belong to a specific group and that is set with an expiration date; and
displaying an icon that corresponds to the storage region on each of the screens of terminals (10) that are respectively operated by the plurality of users until the expiration date arrives.

10. The information processing method according to claim 9, wherein the specific group is a class to which a course is to be taught.

11. The information processing method according to claim 9 or 10, wherein the method further comprises, in displaying the icon that corresponds to the storage region on the screens of the terminals that are respectively operated by the plurality of users until the expiration date arrives, disposing the icon and a second icon that is disposed in each of the screens at a same rank.

12. A program causes a computer (20) to:
generate, in accordance with a command by a specific user, a storage region that is for storing information used by a plurality of users who belong to a specific group and that is set with an expiration date; and
display an icon that corresponds to the storage region on screens of terminals (10) that are respectively operated by the plurality of users until the expiration date arrives.

13. The program according to claim 12, wherein the specific group is a class to which a course is to be taught.

14. The program according to claim 12 or 13,
wherein, in displaying the icon that corresponds to the storage region on the screens of the terminals that are respectively operated by the plurality of users until the expiration date arrives, the program further causes the computer to dispose at a same rank the icon and a second icon that is disposed in each of the screens.
